(19) Europäisches Patentamt
European Patent Office
Office européen des brevets

(11) **EP 1 816 731 A2**

(12) **EUROPEAN PATENT APPLICATION**

(43) Date of publication:
**08.08.2007 Bulletin 2007/32**

(51) Int Cl.:
*H02K 21/14* (2006.01)    *H02K 29/03* (2006.01)

(21) Application number: **07381008.7**

(22) Date of filing: **02.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.02.2006 ES 200600233**

(71) Applicant: **Soluciones Energeticas, S.A.**
**28021 Madrid (ES)**

(72) Inventor: **Vela Vigo, Antonio**
**28001 Madrid (ES)**

(74) Representative: **Urizar Anasagasti, Jesus Maria**
**IPAMARK, S.L.,**
**Paseo de la Castellana, 72-1**
**28046 Madrid (ES)**

(54) **A reversible high-performance electric machine**

(57)    The present invention relates to a reversible, high-performance electric machine due to the low torque rippling despite the fact that the magnetic poles are formed with permanent magnets in which its magnetic part, whether it is the rotor or the stator, is divided into *T* equal parts, each of which is in turn divided into N sectors, each of which has a slot which allows placing one or several longitudinally arranged magnets alternatively or alternately mounted to form the "N" and "S" poles of the machine, different angular dimensions existing between said sectors, selected among those which allow obtaining the greatest reduction of the harmonics, maintaining the dynamic equilibrium of the machine.

Fig. 1

## Description

### Object of the Invention

The object of this invention is to obtain a high-performance, low consumption, high couple and low torque ripple motor-generator, using for that purpose an asymmetrical distribution of ferromagnetic and paramagnetic materials. This electric machine essentially operates like a motor, but it is also able to operate like an electric current generator in applications such as wind generators, and since it is a reversible machine it can also operate, for example, in a lifting apparatus, as a motor or generator when the load being lowered is greater than the counterweight.

There is a wide variety of electric machines, in all of them it is necessary for there to exist a magnetic field and that this field moves in relation to an electric current passing through a coil. If current is provided to the coil, movement is obtained and therefore it is a motor; if on the contrary movement is transmitted to the magnetic field electric current is obtained, therefore it would be a generator. Said magnetic field can be generated by electromagnetic coils or by means of permanent magnets; in the case at hand permanent magnets are used. Synchronous electric machines are machines in which the magnetic field rotates at a constant (synchronous) speed and in correspondence with the rotational speed of the magnetic field; in this type of machines the permanent magnets are placed axially in the cylindrical rotor, having the necessary number of magnets so as to form the poles of the machine. Magnets usually have pole with one sign in the outermost part of the rotor and the opposite sign in the innermost part and they are alternated so as to provide the "N" and "S" poles of the machine.

In a machine of these features, the stator surrounds the rotor, said stator being smooth and having an undetermined number of grooves to house the coils. The coils are fed by means of a three-phase current system to provide a rotating magnetic field interacting with the magnetic field of the rotor to finally produce movement of the motor.

The use of permanent magnets in electromagnetic machines is very environmental friendly in comparison with the electric windings since there are no energy losses, they do not require insulation and they do not have to be cooled. However, due to the interaction of the magnetic field caused by these magnets with the teeth and grooves of the armature in permanent magnet machines, a blocking effect of the rotor occurs. This blocking generates in the motors and generators an irregular operation in a normal rated operation and during the start-up it generates an internal starting resistant torque, which overlaps the load torque. Basically, the blocking occurs due to the property of the magnetic fields of reaching equilibrium in those positions in which the magnetic energy is minimal. In a position in which the poles are opposing, the energy of the magnetic field is minimal and any attempt to move the rotor to the left or to the right increases the magnetic energy, therefore the systems tends to look for the position in which the magnetic energy is minimal, accordingly generating a torque that tends to place the rotor in this position.

As previously indicated, the object of the present invention is a high-performance electric machine, with a high torque and little cogging, virtually lacking torque fluctuations.

### Background of the Invention

In order for the torque to be as continuous as possible it is necessary that there are no low harmonics in the torque curve, such that the fluctuations, if any, are high-frequency fluctuations and which probably have no considerable effect on the mean torque. Therefore, it is necessary for the waveform of the magnetomotive force of the machine to have the lowest number of harmonics possible and to have a perfect sinusoidal form in order to minimally reduce torque fluctuations.

To eliminate the torque fluctuation due to the effects of the harmonics in the magnetomotive force wave as much as possible, different solutions are used: increasing the air gap, using a fractional number for the groove/pole ratio, choosing a high number of grooves and poles, using thick teeth to prevent saturation, keeping the opening of the grooves to the lowest possible minimum, designing the stators or magnets with bias, minimizing or beveling the magnetic poles, rounding off or beveling the stator teeth or making holes in them, using forked teeth, using a low magnetic flux density or offsetting the cogging by appropriately modulating the current of the stator. (HENDERSON J.R.; MILLER, TJE. Design of permanent-magnet motors. Oxford: Magna Physics and Clarendon Press, 1994).

(E. Muljadi and J. Green To be presented at the 21st American Society of Mechanical Engineers Wind Energy Symposium Reno, Nevada January 14-17, 2002).
(DEODHAR, R.P., STATON, D.A., JAHNS, T.M., MILLER, T.J.E.: "Prediction of Cogging Torque using the Flux-MMF Diagram Technigue", IEEE Trans. IAS, Vol. 32, No. 3, May/June, 1996).

### Description of the Invention

The permanent magnet electric machine described in this invention has the lowest harmonics content since the rotor, or stator, is divided into T equal parts, where T is an integer between 2 and $\infty$ (case of linear motors), each of which is in turn divided into N sectors each of which is identified with a magnetic pole, between which sectors there are different angular measurements between at least some of them, the angular dimensions of which are selected from those which allow obtaining the greatest reduction of harmonics, maintaining the dynamic equilibrium of the machine. A slot existing in each division or sector allows placing one or several longitudinally arranged magnets, alternately or alternating mounted to form the "N" and "S" poles of the machine; these magnets can have different dimensions provided that the mechanical equilibrium of the machine is maintained.

The rotors and stators can both be asymmetrical at the same time. Both of them can also be wound without magnets, but at least one being asymmetrical.

This asymmetry allows eliminating the pulsing torque caused mainly by the presence of harmonics 3 and 5 in the magnetomotive force of the machine.

The theoretical reason for this phenomenon is based on the series of Fourier, a mathematician who demonstrated that a function defined in an interval can be represented with a series containing only sine and cosine terms. In more general terms, a sinusoidal signal can be obtained from the sum of other signals of the same type and of different frequencies and amplitudes. In the machine of the invention, due to the asymmetry in the distribution of the poles of each phase, when each pole rotates it generates a sinusoidal magnetomotive force, the Fourier sum of all these sinusoidal forces being what forms the main magnetomotive force, which approaches a perfect sinusoid perfecta, as has been experimentally observed and by means of calculation, such that the torque fluctuations, or also the so-called cogging effect, are minimized.

The calculation method applied in carrying out electric machines according to the present invention is as follows:

Assume that the circumference is to be divided into *"T"* sections and each section consists of N poles:

where $\alpha_i = sin((i - 0.5) * (\pi/N))$,
with $i \in [1,N]$ and $K = \Sigma\alpha_i$

The following electrical degrees are obtained:

$\beta_i = \alpha_i / K$; and the mechanical grades:
$\Upsilon_i = \beta_i * 2 / T$

In practice, each $\gamma_i$ is reduced by a constant value depending on the ratio of the thickness of the magnet and the radius of the armature.

The longitudinal grooves separating the parts of the slot are constructed with an angle $\beta$ in relation to the shaft. This arrangement is chosen to fully eliminate the pulsing torque and facilitate rotation.

With this asymmetry the functions of the rotor and stator can be interchanged and the winding can also be constructed internally with the magnets being external (case of a fan or wind generator).

Since the machine is formed as described there are no pulsing forces on the shaft, therefore the latter freely rotates, being able to use the machine as a generator (for wind generators, for example) or motor. Due to its high torque the machine can be used without reducers.

The asymmetric distribution of the poles of this machine also makes it an almost perfect sinusoidal generator.

Other advantages have been observed in the machine of the present invention, such as:

-    This type of machines can be as large as desired without losing the equilibrium qualities and the reversible structure of the machine, the recovery of most of the energy being possible in braking processes since the machine alone is a proportional brake.
-    The shaft and part of the assembly can be made of non-metallic materials.
-    It can be designed for any number of poles and can further be single-phase, three-phase or polyphase.
-    It can be submerged or used in explosive atmospheres since it is brushless.
-    The magnets can be plastic and a metal sleeve (or a sleeve made of another material) can be placed to improve the properties at high speeds, reducing the viscous friction and centrifuging.
-    The high performance and simple manufacture allow reducing manufacturing costs, whether they are used for small electrical home appliances or for large machines.
-    This system can be used to minimize vibrations even in explosion motors by moving the angles of the cylinders in relation to the crank shaft. It can also be used to calculate the spacing of the cutting teeth in tools and to prevent vibrations and resonance.
-    This type of machines, used in radial and tangential fans in turbine engines, reduces noise and vibrations (for example in aviation turbine engines).

**Description of the Drawings**

To complement the description being made and for the purpose of aiding in understanding the features of the invention a set of drawings is attached to the present specification in which the following has been shown with an illustrative and non-limiting character:

Figure 1 shows respective cross-section and side elevational views of a rotor made according to the specifications of the present invention.

Figure 2 shows a sectional view of an alternative embodiment of a rotor of a machine with these features.

Figure 3 shows a graph of the variation of the pole-teeth surface for different polar width dimensions specified in the previous Figure when compared with the values obtained when the polar widths coincide.

**Preferred Embodiment of the Invention**

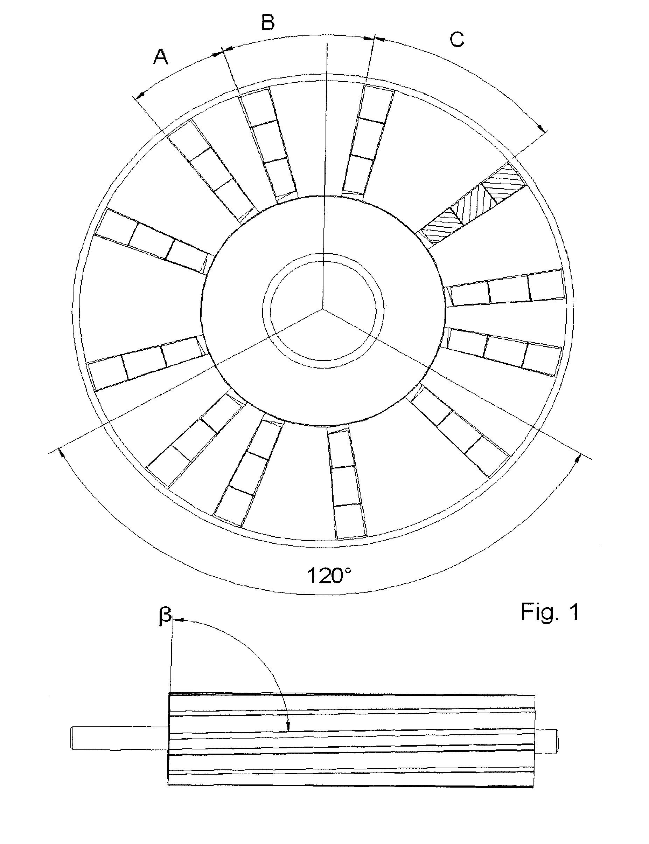

Figure 1 shows a reversible high-performance electric machine due to the low torque rippling despite the fact that the magnetic poles are formed with permanent magnets in which the magnetic part thereof, whether it is the rotor or the stator, is divided into T equal parts, each of which is in turn divided into N sectors, each of which has a slot which allows placing one or several longitudinally arranged magnets, alternatively or alternately mounted to form the "N" and "S" poles of the machine, different angular dimensions (A-B-C) existing between said sectors, selecting among them those which allow obtaining the greatest reduction of harmonics, maintaining the dynamic equilibrium of the machine.

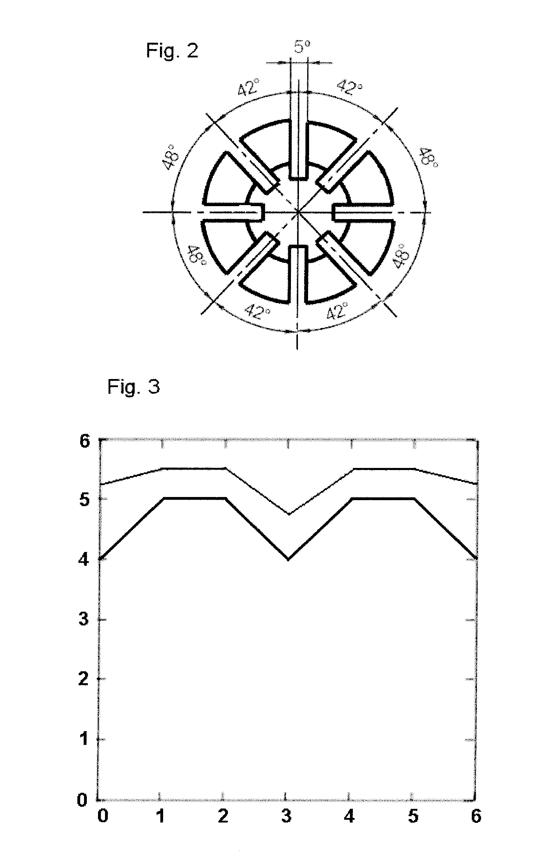

In the machine shown in Figure 1, the different sectors (A-B-C), which correspond with each pole of the machine, are different from the remaining sectors of the same part T in to which the magnetic part of the machine is divided. In contrast, every two sectors of the machine of Figure 2 have equal angular dimensions and each pair is different from the previous one.

The side elevational view of Figure 1 shows the longitudinal grooves in which the permanent magnets are introduced, forming an angle $\beta$ in relation to the shaft.

Figure 2 shows a motor formed by eight poles (2p=8), in which the magnets are in the radial position; in this case the stator has 24 grooves (K=24) and the asymmetry that must be provided to the poles in order to reduce the blocking torque will be determined by applying the principle of the present invention.

The blocking torque is produced by the tendency of the magnetic fields to seek the equilibrium position, which is the position of minimal magnetic energy. In the case of motors with a permanent magnet rotor, the blocking torque is maximal in the positions in which the polar surfaces are opposite to the largest surface of teeth of the stator. To minimize this effect the attempt is made that for the different positions that the teeth adopt in relation to the poles, the variation of the energy value of the magnetic field in the air gap is minimal, considering the leakage flux value in the air gap.

The manner of resolving this as proposed consists of making the poles asymmetrical such that there is very little difference between the positions of maximal and minimal magnetic energy. Another solution is to construct the stator with tilted grooves, such that the surface having the teeth opposite to the poles remains virtually constant, and therefore the value of the magnetic energy in the air gap is maintained constant for any position.

The most rigorous way to determine the value of asymmetry is to conduct a study by means of a magnetic field simulation program or by means of studying the variation of the energy values (opposing pole-tooth surface) for the different pole arcs and the different positions of the rotor. The effect of leakage fluxes has not been considered in this simplification.

The parameters of the permanent magnet motor of Figure 2 are as follows:

| | | |
|---|---|---|
| Diameter of the rotor | | $D_r$ - 56 mm. |
| Circumference | $C=\pi.D_r$ | C = 176 mm. |
| Pairs of poles | | p = 4 |
| Pole pitch | $\tau = C/2p$ | $\tau$ = 22 mm. |
| Pole gap | | g = 5 mm. |
| Pole arc | b=$\tau$-e | b = 17 mm. |
| Grooves | | K = 24 |
| Diameter of stator | | $D_i$ = 57 mm. |
| Groove pitch | $p_g=\pi.D_r/K$ | $p_g$ = 7.5 mm. |
| Groove width | | $w_g$ = 2.2 mm. |
| Tooth width | | $w_t$ = 5.3 mm. |

The value of the variation of the pole-teeth surface for different dimensions of the pole width has been checked, selecting the value for which the difference between the maximum and minimum vales is the lowest.

This optimal value has been obtained for a pole width value b1= 15.5 mm and b2= 18.5 mm, with the surface variation values indicated below. It is compared with the values obtained for b1=b2 =17 mm in the graph represented in Figure 3.

This value corresponds to pole pitches:

$$\tau 1 = b1 + g = 15.5 + 5 = 20.5 \text{ mm}$$

$$\tau 2 = b2 + g = 18.5 + 5 = 23.5 \text{ mm}$$

and angles:

$$\alpha 1 = \frac{90º}{\tau 1 + \tau 2}.\tau 1 = 42º \qquad \alpha 2 = \frac{90º}{\tau 1 + \tau 2}.\tau 2 = 48º$$

A constant energy value of the magnetic field in the air gap could optionally be obtained without having to make the poles asymmetrical. To achieve this, both the pole width and the pole gap must comprise a number of groove pitches which is an integer.

In the case of the motor studied, since the number of grooves being $K=24$ and the number of poles $2p=8$, each pole pitch comprises $Kp=24/8$ = 3 grooves.

The width of the pole shoe can be made to comprise two groove pitches and the pole gap made to comprise one groove pitch, the following resulting as the dimensions of the pole shoe $b$, and of the pole gap g, at the level of the stator:

$$b=(\pi.Di/K).2=14.92 \text{ mm} \qquad g=\pi.Di/K=7.46 \text{ mm}$$

With this configuration, the surface of the iron under the poles remains virtually constant, regardless of the position of the rotor.

With this arranging, assuming a movement of the poles to the right, the surface which is lost in teeth 1 and 4 is recovered in teeth 3 and 6.

Having sufficiently described the nature of the invention as well as a preferred embodiment thereof, it is hereby stated for all intents and purposes that the materials, shape, size and arrangement of the described elements could be modified provided that this does not involve an alteration of the essential features of the invention claimed below.

**Claims**

1. A reversible, high-performance electric machine due to the low torque rippling despite the fact that the magnetic poles are formed with permanent magnets, **characterized in that** the magnetic part of thereof, whether it is the rotor or the stator, is divided into T equal parts, each of which is in turn divided into N sectors, each of which has a slot which allows placing one or several longitudinally arranged magnets, alternatively or alternately mounted to form the "N" and "S" poles of the machine, different angular dimensions existing between said sectors, selecting among them those which allow obtaining the greatest reduction of harmonics, maintaining the dynamic equilibrium of the machine.

2. An electric machine according to the previous claim, **characterized in that** at least either the rotor or the stator, or both at the same time, are asymmetrical.

3. An electric machine according to the previous claims, **characterized in that** the rotor and the stator, or both of them, can be wound provided that at least one of them is asymmetrical.

4. An electric machine, according to the previous claims, **characterized in that** every two of the different sectors N, which correspond with each pole of the machine, have equal angular dimensions and each pair is different from the previous one.

5. An electric machine according to claims 1 to 3, **characterized in that** the different sectors N, which correspond with each pole of the machine, are different from the other sectors of the same part T into which the magnetic part of the machine is divided.

6. An electric machine according to the previous claims, **characterized in that** the longitudinal grooves in which the permanent magnets are introduced are constructed with an angle $\beta$ in relation to the shaft.

7. An electric machine according to the previous claims, **characterized in that** the number T of equal parts into which the magnetic area of the machine is divided is an integer comprised between 2 and infinity.

120°

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HENDERSON J.R. ; MILLER, TJE.** Design of permanent-magnet motors. Magna Physics and Clarendon Press, 1994
- **E. MULJADI ; J. GREEN.** *To be presented at the 21st American Society of Mechanical Engineers Wind Energy Symposium Reno,* 14 January 2002
- **DEODHAR, R.P. ; STATON, D.A. ; JAHNS, T.M. ; MILLER, T.J.E.** Prediction of Cogging Torque using the Flux-MMF Diagram Technigue. *IEEE Trans. IAS,* May 1996, vol. 32 (3